# EUROPEAN PATENT APPLICATION

(11) **EP 2 014 154 A1**
(43) Date of publication of application: **14.01.2009**
(21) Application number: 08075624.0
(22) Date of filing: 11.07.2008
(51) Int. Cl.: A01G 23/06, A01G 23/091

(54) **Device for cutting down a tree trunk**

(30) Priority: 11.07.2007 NL 1034118
(71) Applicant: Gebr. Kraaijeveld Machinebouw B.V., 2992 Sp Barendrecht (NL)
(72) Inventor: Kraaijeveld, Hendrik Martijn, 2992 AB Barendrecht (NL); Kraaijeveld, Hendrik, 2992 SH Barendrecht (NL)
(74) Representative: van Kooij, Adriaan

(57) **Abstract**

Device for felling a tree trunk, comprising a gripping claw for gripping the tree trunk and a felling means for felling the tree trunk, wherein the gripping claw comprises a frame, at least two gripping shells extending from the frame, of which at least one gripping shell is connected movably to the frame, and a gripping claw drive, wherein the movable gripping shell can be moved by means of the gripping claw drive between an open position, in which a tree trunk can be placed between the gripping shells, and a closed position in which the tree trunk can be clamped between the gripping shells. The device is distinguished in that the felling means is connected movably to at least one of the gripping shells, wherein the felling means can be moved between a protected position, in which the felling means lies within the periphery of the gripping shell connected thereto, and an unprotected position in which the felling means lies outside the periphery of the gripping shell connected thereto.

## Description

The invention relates to a device for felling a tree trunk, comprising a gripping claw for gripping the tree trunk and a felling means for felling the tree trunk, wherein the gripping claw comprises a frame, at least two gripping shells extending from the frame, of which at least one gripping shell is connected movably to the frame, and a gripping claw drive, wherein the movable gripping shell can be moved by means of the gripping claw drive between an open position, in which a tree trunk can be placed between the gripping shells, and a closed position in which the tree trunk can be clamped between the gripping shells.

Such devices for felling tree trunks are known, for instance with a blade, circular saw or chainsaw as felling means. The known devices can usually be coupled to a movable arm of a carrying vehicle, such as for instance an excavator, with which the device is placed round the trunk of a tree. The part of the tree trunk which must be felled is then gripped by the gripping claw, after which the blade or the saw cuts or saws through the tree trunk. The felled part of the tree trunk situated in the gripping claw is then carried to the ground by means of the movable arm, where the felled part is set down for further processing.

A drawback of the known devices is that, due to for instance the vulnerability and size of the felling means, the gripping claw is not suitable for other operations. The felling means can for instance be damaged or get in the way during these operations. Because during felling of a tree operations in which a gripping claw is required are generally performed before and after felling of the tree, the known devices are replaced by a different gripping claw to enable these operations to be performed. In other cases a second excavator with gripping claw is even utilized.

The invention has for its object to obviate or at least alleviate this drawback.

To this end the invention is distinguished in that the felling means is connected movably to at least one of the gripping shells, wherein the felling means can be moved between a protected position, in which the felling means lies within the periphery of the gripping shell connected thereto, and an unprotected position in which the felling means lies outside the periphery of the gripping shell connected thereto.

Because the felling means lies within the periphery of the gripping shell in the protected position, the felling means is protected from damage during operations other than felling of a tree trunk, and the felling means does not get in the way. This has the advantage that the gripping claw of the device can be used in operations other than felling of a tree trunk, whereby for instance a separate gripping claw or a second excavator is no longer necessary.

In an embodiment according to the invention the felling means is connected to the movable gripping shell. This measure makes it possible for the tree trunk to be pressed against the frame and/or a gripping shell fixedly connected to the frame during felling thereof by the felling means. This has the advantage that the tree trunk is not pressed from the hold of the gripping claw during felling.

A further development of the invention is that the movable gripping shell is connected to the frame for pivoting about a first pivot axis, and a drive means is arranged which is connected to the frame on one side and is connected on the other side to the felling means for pivoting about a second pivot axis, wherein the felling means can be moved by the drive means between the protected position and the unprotected position, and wherein the first pivot axis coincides with the second pivot axis in the protected position. This measure makes it possible, when the gripping shell is moved in the protected position, for the felling means connected thereto to remain within the periphery of the gripping shell without the use of the drive of the felling means. This has the advantage that no complicated circuits are necessary for the purpose of synchronizing the movement of the felling means with the movement of the gripping shell to which it is connected.

A further development of the invention is that the gripping shell to which the felling means is connected comprises a stop against which the felling means can lie in the protected position. This measure makes it possible to place the felling means in simple manner precisely in the orientation desired for the protected position relative to the gripping shell to which it is connected. In the case the gripping shell is connected pivotally to the frame and the drive of the felling means is connected pivotally to the felling means, it is for instance important for a good operation that the pivot axis of the drive of the felling means exactly coincides with the pivot axis of the gripping shell. In this case the stop has the advantage that the exact coincidence of the pivot axes can be realized in simple manner. In addition, the stop has the advantage that the felling means cannot be moved in the wrong direction.

A further development of the invention is that the felling means comprises a blade which is connected pivotally to the gripping shell. This measure forms a simple, low-maintenance and robust implementation of the felling means. A further development hereof is that on the frame there is arranged a counter-blade against which the tree trunk can be clamped in the closed position. When the tree trunk is clamped this counter-blade penetrates the tree trunk and the tree trunk is prevented from breaking.

A further development of the invention is that the gripping shells between which the tree trunk can be clamped are offset relative to each other, whereby the gripping shells can overlap in the closed position. This measure makes it possible to grip tree trunks of differing diameter using the gripping shells. This has the advantage that the device can be applied with tree trunks of differing diameter.

A further development of the invention is that the gripping claw comprises two pairs of gripping shells lying opposite each other, wherein each pair comprises a gripping plate extending between the gripping shells thereof. This measure makes it possible also to grip objects in the area between mutually adjacent gripping shells. This has the advantage that the gripping claw is suitable for gripping objects which are smaller than the distance between mutually adjacent gripping shells.

A further development of the invention is that the frame comprises a coupling means with which the gripping claw can be coupled to a carrying vehicle. This measure makes it possible for the device to be used in combination with different carrying vehicles. A further development hereof is that the coupling means is rotatable so that the gripping claw can be rotated relative to the carrying vehicle. This measure for instance makes it possible to be able to fell parts of a tree trunk with a differing orientation. For instance both horizontal parts and vertical parts, and parts with an orientation therebetween. This measure moreover makes it possible, after felling of the tree trunk, to rotate the felled part of the tree trunk so that it can for instance be laid on the ground for further processing.

The invention also relates to a carrying vehicle provided with a device according to the invention.

The present invention will be further elucidated hereinbelow on the basis of an exemplary embodiment, which is shown schematically in the accompanying figures. This is a non-limitative exemplary embodiment. In the figures:
- fig. 1 shows a perspective view of a device according to the invention with gripping shells in an open position;
- fig. 2 shows a perspective view of the device of fig. 1 with gripping shells in a closed position;
- fig. 3 shows a perspective view of the device of fig. 2 with a felling means in an unprotected position;
- fig. 4 shows a perspective view of a part of the device of fig. 1;
- fig. 5 shows an exploded perspective view of a part of the device of fig. 1;
- fig. 6 shows a side view of a device according to the invention which is connected to a movable arm of a carrying vehicle, before felling of a tree trunk;
- fig. 7 shows a side view of the device of fig. 6 after felling of the tree trunk.

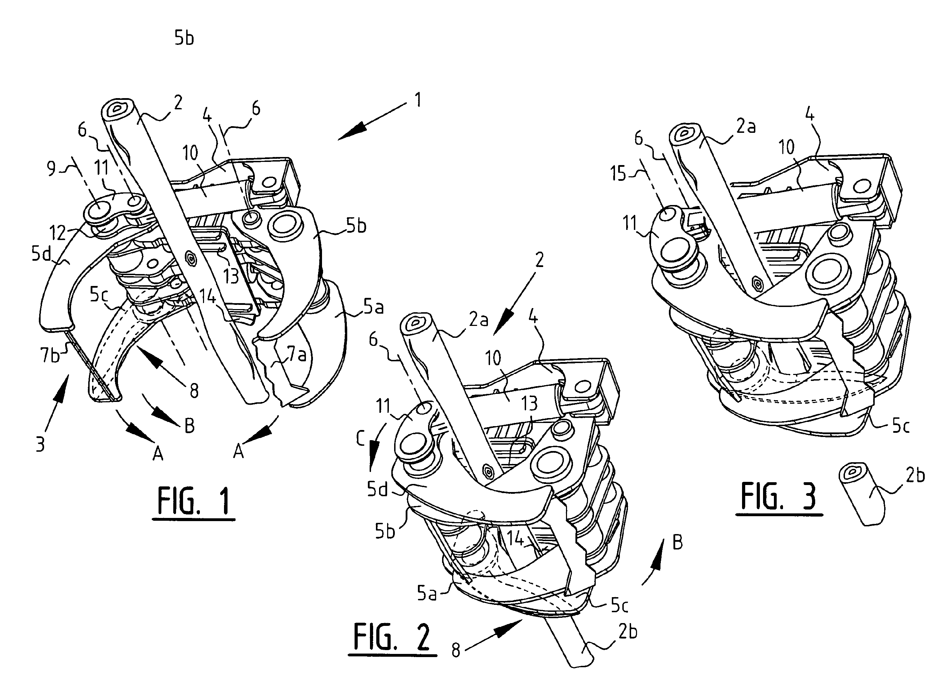

Figure 1 shows an embodiment of a device 1 according to the invention for felling a tree trunk 2. This device 1 has a gripping claw 3 consisting of a frame 4 and four gripping shells 5a-5d extending from frame 4. Gripping shells 5a-5d are connected to frame 4 for pivoting about a pivot axis 6. Extending between gripping shells 5a and 5b is a gripping plate 7a. Gripping shells 5a and 5b and gripping plate 7a form a first pair of gripping shells. Extending between gripping shells 5c and 5d is a gripping plate 7b. Gripping shells 5c and 5d and gripping plate 7b form a second pair of gripping shells. The first and the second pair of gripping shells are located opposite each other.

Gripping shells 5a-5d are shown in open position. From this open position gripping shells 5a-5d can be moved in the direction of arrows A by means of a gripping claw drive (not shown in figure 1).

A felling means in the form of blade 8 is connected to movable gripping shell 5c for pivoting about a pivot axis 9. Blade 8 is shown with broken lines because blade 8 lies behind gripping shell 5c in figure 1. Blade 8 is shown in the protected position, in which blade 8 lies within the periphery of gripping shell 5c. From this protected position blade 8 can be moved in the direction of arrow B by means of the drive means in the form of hydraulic cylinder 10. Hydraulic cylinder 10 is connected on one side to frame 4 and on the other side to blade 8 by means of lever 11 and shaft 12. Hydraulic cylinder 10 is connected to lever 11 for pivoting about a pivot axis which, in the shown protected position of blade 8, coincides with pivot axis 6 of gripping shell 5c. Blade 8 will hereby not be displaced relative to gripping shell 5c when gripping shell 5c is moved in the direction of arrow A. Blade 8 then remains within the periphery of gripping shell 5c and thus remains protected. Figure 1 also shows three support ribs 13 and counter-blade 14 on frame 4.

Figure 2 shows device 1 of figure 1 with gripping shells 5a-5c in closed position, wherein tree trunk 2 is clamped between gripping shells 5a-5d. Because the mutually opposite gripping shells 5b and 5d, between which tree trunk 2 is clamped, are offset relative to each other, gripping shells 5b and 5d overlap each other in this closed position. In this closed position tree trunk 2 is pressed against the three support ribs 13 and counter-blade 14, wherein counter-blade 14 is forced into the tree trunk.

In figure 2 the pivot axis around which hydraulic cylinder 10 is pivotally connected to lever 11 still coincides with pivot axis 6 around which gripping shell 5c is pivotally connected to frame 4, whereby blade 8 still lies in the protected position within the periphery of gripping shell 5c. By extending hydraulic cylinder 10 the lever 11 is pressed from the position shown in figure 2 in the direction of arrow C, whereby blade 8 is moved in the direction of arrow B. Blade 8 is here moved into the unprotected position outside the periphery of gripping shell 5c, wherein part 2a of tree trunk 2 is severed from part 2b. The result hereof is shown in figure 3. In this figure 3 blade 8 is in the unprotected position, wherein the second pivot axis 15, around which hydraulic cylinder 10 is pivotally connected to lever 11, no longer coincides with first pivot axis 6 around which gripping shell 5c is pivotally connected to frame 4.

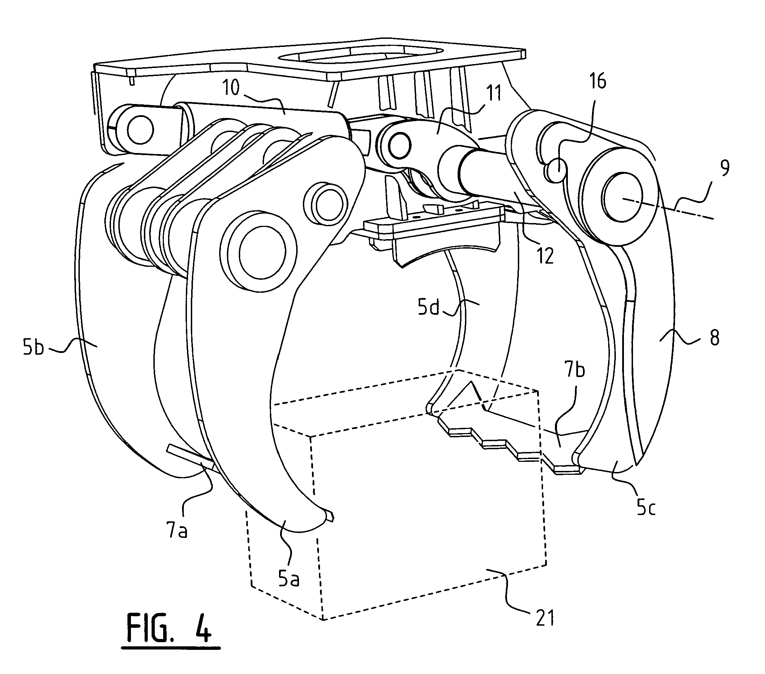

Figure 4 shows a part of device 1 of figure 1 from the side of gripping shell 5c on which blade 8 is arranged. For the sake of clarity parts of device 1 are not shown. It can be clearly seen that hydraulic cylinder 10 is connected to blade 8 by means of lever 11 and shaft 12. Blade 8 is shown in the protected position, in which it lies within the periphery of gripping shell 5c. Blade 8 is connected to gripping shell 5c for pivoting about pivot axis 9. In the shown protected position blade 8 lies against the stop in the form of protrusion 16.

Also shown in figure 4 is that an object 21 with dimensions smaller than the distance between gripping shells 5a and 5b and between gripping shells 5c and 5d respectively can be clamped between gripping plates 7a and 7b. The gripping claw is hereby suitable for instance for operations other than felling tree trunks.

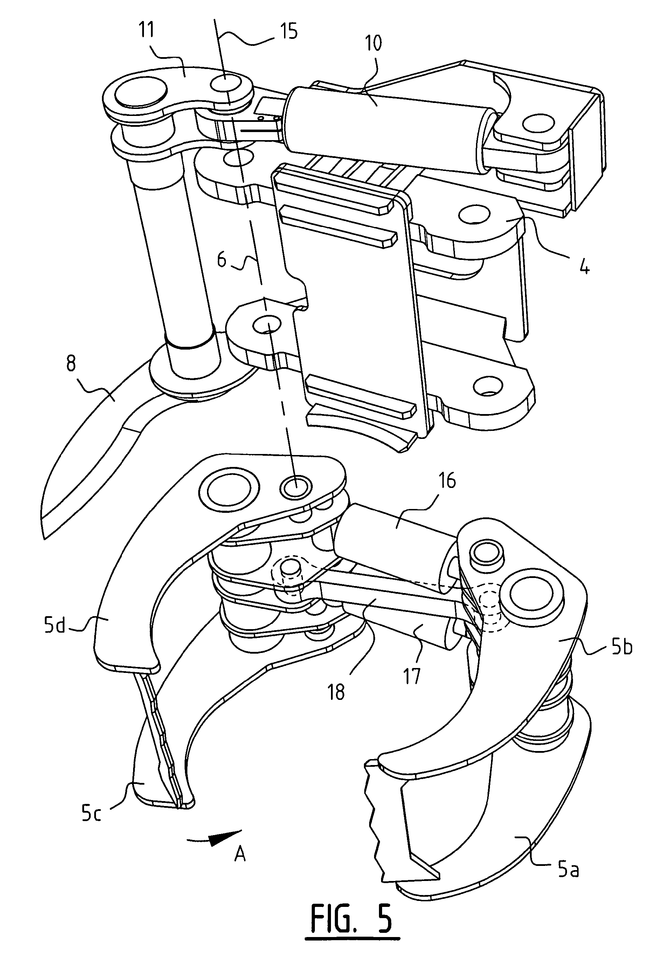

Figure 5 shows an exploded part of device 1 of figure 1. For the sake of clarity parts of device 1 are not shown. Shown is that in the protected position of blade 8 the second pivot axis 15, around which hydraulic cylinder 10 is pivotally connected to lever 11, coincides with first pivot axis 6 around which gripping shells 5c and 5d are pivotally connected to frame 4. When gripping shells 5c and 5d are rotated around first pivot axis 6, lever 11 will hereby not be displaced relative to gripping shell 5d and blade 8 will not be displaced relative to gripping shell 5c, whereby blade 8 remains in the protected position within the periphery of gripping shell 5c.

Figure 5 also shows the gripping claw drive in the form of two hydraulic cylinders 16 and 17, and equalizing rod 18 which brings about coupling of the movement of gripping shells 5a and 5b on one side and the movement of gripping shells 5c and 5d on the other side. This for instance guarantees that the gripping shells can overlap in the closed position.

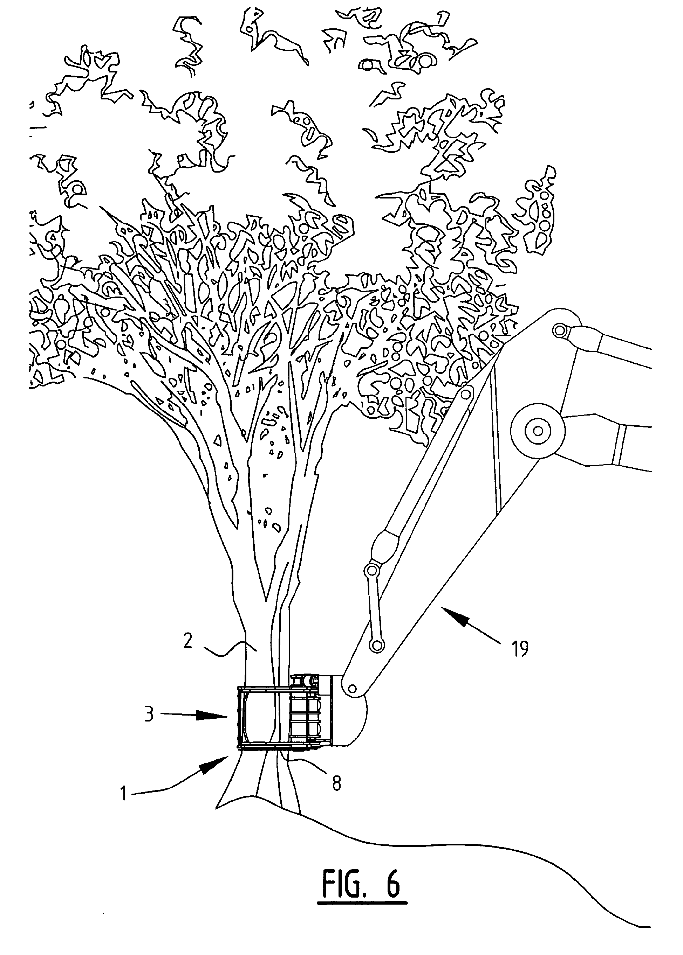

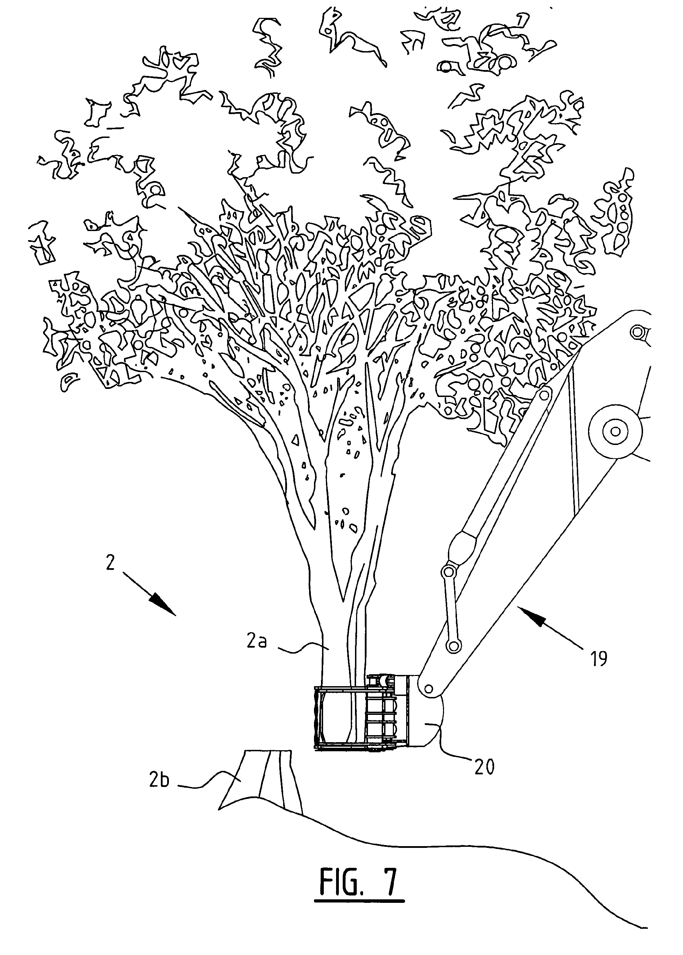

Figure 6 shows device 1 of figure 1 on a movable arm 19 of a carrying vehicle (not shown). A tree trunk 2 is clamped in clamping claw 3 of device 1. Blade 8 is situated on the underside of device 1 in figure 6. The tree trunk can be cut through by means of the blade, after which as shown in figure 7 the cut-away part 2a of tree trunk 2 can be removed from part 2b of the tree trunk. Not shown is that the device is coupled rotatably to head 20 of movable arm 19, whereby part 2a of tree trunk 2 can be rotated in the direction perpendicularly of the plane of the drawing.

In order to prevent the blade unintentionally moving out of the protected position, the device can be provided with safety means, such as for instance a hydraulic valve which only allows operation of the hydraulic cylinder when the gripping shells overlap each other.

Figure 1 shows the felling means as a blade. The felling means can for instance also be a chainsaw blade or a circular saw blade.

Figure 1 shows the gripping claw with two pairs of mutually opposite movable gripping shells. It is also possible for only one of the pairs to be movable.

Figure 1 shows the gripping claw with four gripping shells. The gripping claw can also have two or three or more than four gripping shells.

Figure 1 shows a gripping plate between two mutually adjacent gripping shells. It is also possible for no gripping plate to be arranged between two mutually adjacent gripping shells.

In figure 1 the drive of the felling means is in the form of a hydraulic cylinder. The drive of the felling means can also be an electric cylinder or other form of linear drive, or for instance a rotation drive.

Figure 1 shows that the hydraulic cylinder which can displace the blade is on a different side of the frame from the blade. The blade and the associated hydraulic cylinder can also be arranged on the same side of the frame.

In figure 1 the gripping shells and the blade are movably connected such that they can make a rotating movement. The gripping shells and/or the blade can also be connected for movement in other manner so that they can for instance make a translating movement.

## Claims

1. Device for felling a tree trunk, comprising:
- a gripping claw for gripping the tree trunk; and
- a felling means for felling the tree trunk;
wherein the gripping claw comprises:
- a frame;
- at least two gripping shells extending from the frame, of which at least one gripping shell is connected movably to the frame; and
- a gripping claw drive;
- wherein the movable gripping shell can be moved by means of the gripping claw drive between an open position, in which a tree trunk can be placed between the gripping shells, and a closed position in which the tree trunk can be clamped between the gripping shells;
**characterized in that**
- the felling means is connected movably to at least one of the gripping shells;
- wherein the felling means can be moved between a protected position, in which the felling means lies within the periphery of the gripping shell connected thereto, and an unprotected position in which the felling means lies outside the periphery of the gripping shell connected thereto.

2. Device as claimed in claim 1,
**characterized in that**
the felling means is connected to the movable gripping shell.

3. Device as claimed in claim 2,
**characterized in that**
- the movable gripping shell is connected to the frame for pivoting about a first pivot axis;
- a drive means is arranged which is connected to the frame on one side and is connected on the other side to the felling means for pivoting about a second pivot axis, wherein the felling means can be moved by the drive means between the protected position and the unprotected position, and wherein the first pivot axis coincides with the second pivot axis in the protected position.

4. Device as claimed in any of the foregoing claims,
**characterized in that**
the gripping shell to which the felling means is connected comprises a stop against which the felling means can lie in the protected position.

5. Device as claimed in any of the foregoing claims,
**characterized in that**
the felling means comprises a blade which is connected pivotally to the gripping shell.

6. Device as claimed in claim 5,
**characterized in that**
on the frame there is arranged a counter-blade against which the tree trunk can be clamped in the closed position.

7. Device as claimed in any of the foregoing claims,
**characterized in that**
the gripping shells between which the tree trunk can be clamped are offset relative to each other, whereby the gripping shells can overlap in the closed position.

8. Device as claimed in any of the foregoing claims,
**characterized in that**
the gripping claw comprises two pairs of gripping shells lying opposite each other, wherein each pair comprises a gripping plate extending between the gripping shells thereof.

9. Device as claimed in any of the foregoing claims,
**characterized in that**
the frame comprises a coupling means with which the gripping claw can be coupled to a carrying vehicle.

10. Device as claimed in claim 9,
**characterized in that**
the coupling means is rotatable so that the gripping claw can be rotated relative to the carrying vehicle.

11. Carrying vehicle provided with a device as claimed in any of the claims 1-10.
